# EUROPEAN PATENT APPLICATION

(11) **EP 2 937 161 A1**
(43) Date of publication of application: **28.10.2015**
(21) Application number: 15163992.9
(22) Date of filing: 17.04.2015
(51) Int. Cl.: B22C 3/00, B22C 9/10, B28B 1/00, B28B 1/30, B28B 7/34, B22C 23/00

(54) **CERAMIC CASTING CORE MADE BY ADDITIVE MANUFACTURING**

(30) Priority: 24.04.2014 US 201461995901 P
(71) Applicant: Howmet Corporation, Whitehall, MI 49461 (US)
(72) Inventor: Frank, Gregory R., Morristown, TN 37814 (US)
(74) Representative: Trinks, Ole

(57) **Abstract**

A method of making a ceramic casting core involves using additive manufacturing to form a 3D ceramic casting core that includes an outer core body surface layer that exhibits reduced chemical reactivity with the molten metal or alloy being cast, wherein the ceramic body and the outer core body layer each comprises a layer-on-layer structure in a build direction of the ceramic casting core resulting from the additive manufacturing process, such as 3D printing.

## Description

### FIELD OF THE INVENTION

The present invention relates to the casting of metals or alloys to make hollow articles, such as, for example, internally cooled gas turbine engine airfoil components, or other components, using a ceramic casting core made by additive manufacturing (AM) to have a core exterior layer that exhibits reduced chemical reactivity with the molten metal or alloy being cast.

### BACKGROUND OF THE INVENTION

Numerous investment casting alloys contain elements that have a propensity to thermo-chemically "react" at casting temperature with silica-based, and, to a lesser extent, alumina-based ceramic core materials. These elements include, but are not limited to; Ti, Hf, AI, Y, La, Cr, Mg.

Thermo-chemical core/metal reaction has plagued the investment casting industry since the addition of reactive elemental additions to superalloys commenced decades ago and since titanium and titanium alloys have been cast. The ability to produce cast components with little-to-no reaction at the core/metal interface is critical to meeting customer component intent. Mitigating said reactions would improve the overall quality of the casting by extending part life and/or minimizing the potential for product failure during component operation

Past practice has demonstrated that incorporating a "non-reactive" ceramic oxide material on the external surfaces of the core, in adequate thickness and with adequate degree of adherence, can minimize said reaction(s). This, in turn, permits the cast component to meet the design and metallurgical intent of the original equipment manufacturer. Historically, the most effective non-reactive ceramic barrier coatings have been based on rare-earth oxides (or compounds thereof). By way of example, one rare earth material frequently used in this regard is "yttrium oxide" (yttria). Producing monolithic cores out of yttria, however, is cost prohibitive, as fused yttria currently commands a market price of approximately $100 USD/lb compared to silica at approximately $0.50 USD/lb. Additionally, cores produced any appreciable concentration of rare earth oxide material(s), or oxidic based compounds thereof, have historically proven difficult to remove from castings as they typically exhibit poor leachability characteristics when exposed to caustic based leaching solutions as are commonly utilized in the investment casting industry. Traditional reaction barrier coatings have been applied to ceramic cores via various processing techniques including, but not limited to; slurry dipping, slurry spraying, physical vapor deposition (PVD), and chemical vapor deposition (CVD), for example, as described in Howmet US Patent 4,703,806. These deposition techniques can be hampered by line-of-sight limitations, and other processing factors, which can result in inconsistent coating deposition thicknesses and therefore inconsistent reaction mitigation.

Conventional ceramic core forming techniques include, but not limited to: injection molding, transfer molding, and poured (slurry-based) processes. One relatively recent development in the field of rapid prototyping involves "additive manufacturing" techniques, whereby articles are built in sequential layers, from computer-based electronic models, to ultimately form a three dimensional object. Additive manufacturing is defined by the American Society for Testing and Materials (ASTM) as the "process of joining materials to make objects from 3D model data, usually layer upon layer, as opposed to subtractive manufacturing methodologies, such as traditional machining and casting." In an additive manufacturing process, a model, such as a design electronic model, of the component to be made may be defined in any suitable manner. For example, the model may be designed with the aid of computer-aided design (CAD) software. The model may include 3D numeric coordinates of the entire configuration of the component including both external and internal surfaces. The model may include a number of successive two-dimensional slices that together form the 3D component. Some examples of additive manufacturing include, but are not limited to, 3D printing, direct deposition, stereolithography (SLA), direct write (micro-pen deposition) in which liquid media is dispensed with a precision pen tip and cured, selective laser sintering (SLS) in which a laser is used to sinter a powder medium in precisely controlled locations. 3D printing technology can also be defined as solid free form manufacturing, free form manufacturing, and rapid manufacturing. Additive manufacturing offers significant manufacturing flexibility and can significantly reduce both overall start-up costs (as no "hard tooling" is required) and "time-to-market" relative to traditional manufacturing processes.

### SUMMARY OF THE INVENTION

The present invention provides a method of making a ceramic casting core using additive manufacturing and the ceramic casting core so produced that includes an outer core body layer that exhibits reduced chemical reactivity with the molten metal or alloy being cast, wherein the ceramic body and the outer core body layer each comprises a particle layer-on-layer structure in a build direction of the ceramic casting core resulting from the additive manufacturing process.

In an illustrative embodiment of the present invention, a functionally graded 3D printed ceramic casting core is provided and includes a ceramic particulate core body and an outer core body layer that resides on the core body and that comprises a different ceramic particulate material from that of the core body so as to exhibit reduced reactivity to the molten metal or alloy being cast. The core body and the outer core body layer both are formed using an additive manufacturing process, such as 3D printing, to have a resulting layer-on-layer structure of the respective ceramic particulates in the build direction of the as-manufactured core, wherein the build direction is the direction in which the layers of ceramic particulate materials are built-up one upon the other during the additive manufacturing process.

Practice of the present invention employs additive manufacturing techniques to precisely construct the outer core body layer (periphery) from ceramic particulate (e.g. ceramic powder) material independent of those of the bulk core body. For example, the outer layer of the ceramic core body can be composed of preferential, non-reactive oxide-based particulate materials in contrast to the bulk core body chemistry and/or particle size. The outer core body layer can be composed of, for instance, fused or calcined yttria powder while the internal core body construction can be comprised of less expensive, more leachable powder materials (silica, alumina, mullite, zircon as well as other oxidic powder materials common within the investment casting field). The resultant porosity of the outer core body layer and inner core body can also be dictated and controlled independently by the addition of fugitive particulate materials to the ceramic particulate materials. The peripheral, non-reactive outer core body layer can be built to varying thicknesses, within a particular singular ceramic core design, to account for varying associated alloy thicknesses or time-at-temperature casting conditions, or can be of consistent thickness for a given ceramic core configuration. In addition, additive manufacturing can permit the incorporation of leachant-enhancing channels or void-spaces within the ceramic core, strategically located adjoining, or with preference to, thicker areas of the less-leachable peripheral layer(s).

Practice of the present invention thus offers the ability to preferentially produce precisely positioned "zone(s)" of differing chemistry and/or physical morphology (e.g. porosity/leachant access channels) within the cross-section of the ceramic core during core-build. Ceramic casting cores pursuant to the present invention can be used to produce cast metal or alloy components with minimal-to-no reaction via the strategic application of a non-reactive exterior layer(s) to the ceramic cores. Such layer(s) need only be "built" in necessary thicknesses and at precisely the necessary peripheral zones of the ceramic core most susceptible to reaction during the casting process.

Other advantages of the present invention will become readily apparent from the following detailed description of the invention taken with the following drawings.

### BRIEF DESCRIPTION OF THE DRAWINGS

Figure 1 is a perspective view of an illustrative ceramic casting core.
Figure 2 illustrates a cross-section taken through the airfoil region of a ceramic casting core pursuant to an embodiment of the invention showing an inner core body and an outer core layer that is less reactive with the molten metal or alloy being cast wherein the core body and outer core body layer have a particle layer-on-layer structure. The inset of Figure 2 schematically illustrates the particle layer-on-layer structure formed by 3D printing of the core body and outer core body layer.
Figure 2A shows a cast airfoil superalloy component C cast and solidified in a ceramic investment shell mold having the fired ceramic core in the mold.
Figure 3 illustrates a schematic sectional perspective view of a ceramic casting core pursuant to another embodiment of the invention and a cast component formed using the ceramic core wherein the outer core body layer has different local thicknesses tailored to accommodate local heat load and wherein ceramic core body has leachant access channels.
Figure 4 shows an outer core body layer comprising multiple layers with one sub-layer containing a porosity-forming material illustrated as black dots.
Figure 5 is a schematic perspective view of a 3D printer that includes a cassette (printer head) having multiple nozzles (two shown) for depositing a mixture of ceramic powder and UV curable binder onto the build tray or support.

### DETAILED DESCRIPTION OF THE INVENTION

For purposes of illustration and not limitation, the present invention will be described below with respect to certain exemplary embodiments, one of which relates to making a hollow gas turbine engine airfoil component, such as a blade of vane having one or more internal passages for cooling air. Such airfoil components typically are formed by investment casting wherein a ceramic casting core is disposed in a ceramic investment shell mold, and the molten metal or alloy is introduced into and solidified in the mold around the ceramic core with the ceramic core defining desired internal passage features. When producing investment cast nickel or cobalt superalloy airfoil components containing "reactive" constituents (ie.; Ti, Hf, Al, Y, La, Cr, Mg, et al), the exterior core body layer preferably comprises an oxide-based material(s) of relatively high Gibbs free energy of formation (per mole of oxygen) to reduce, or substantially eliminate, reaction with the metal or alloy being cast under the particular casting conditions employed (e.g. metal or alloy chemistry, molten metal or alloy superheat when introduced into the mold, solidification time, etc.). By way of example, rare-earth-based oxide core layers, such as preferably yttria (Y₂O₃), are advantageous for minimizing core/metal "oxide-based" reactions as described in US Patent 4,703,806. The same is true with respect to investment casting of titanium metal and titanium alloys where formation of relatively brittle alpha case on the cast component can be a problem. Alpha case can range in thickness from about 0.005 inches to 0.050 inches, with thickness being dependent upon the specific casting process and the specific geometry of the cast component. Alpha case is removed via chemical milling, which increases manufacturing costs and lead times and presents a significant problem from the standpoint of accuracy of dimensions. In order to achieve a dimensionally correct casting, hard tooling for each cast component must take chemical milling into consideration. Alpha case thickness will typically vary along the surface of the casting, dependent upon casting conditions and casting geometry, which can therefore lead to considerable problems with regard to dimensional variation.

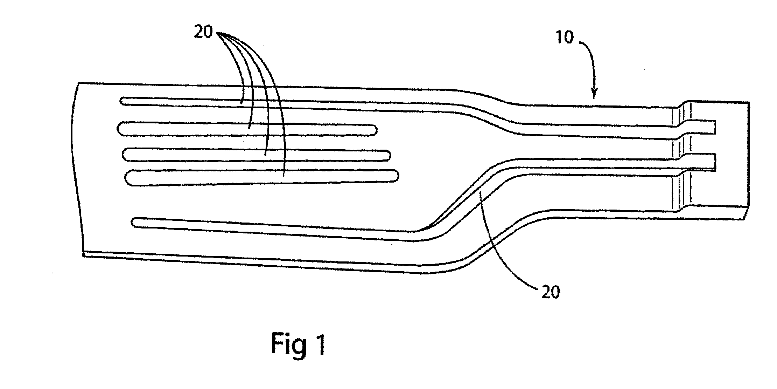

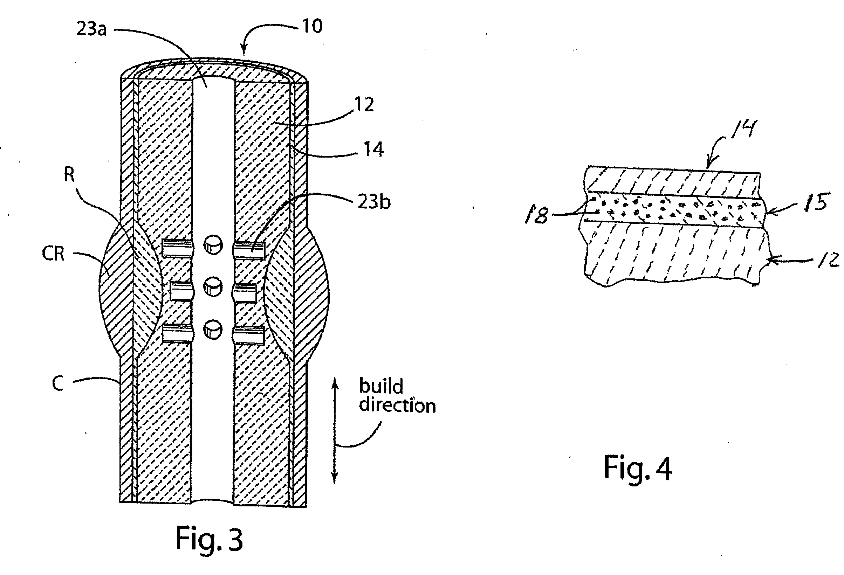

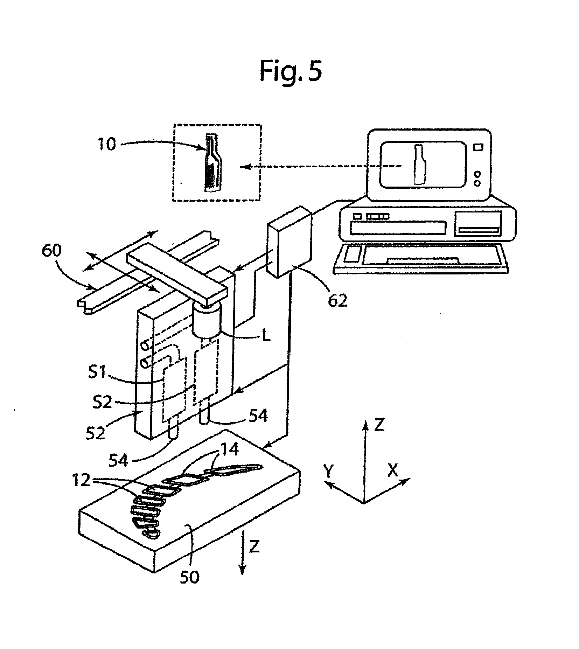

Referring to the Figures 1-5, the present invention provides a method of making a functionally graded ceramic casting core using an additive manufacturing process wherein the ceramic casting core 10 includes an inner core body 12 comprising ceramic particulate material P and an outer core body layer 14 that comprises a different ceramic particulate material P' from that of the core body 12 so as to exhibit reduced reactivity to the molten metal or alloy being cast in the ceramic investment shell mold M. The core body 12 and the outer core body layer 14 both are formed using an additive manufacturing process, such as 3D printing, to have a resulting layer-on-layer structure or morphology of their respective ceramic particulates (e.g. ceramic powders) in the build direction of the as-manufactured core 10 wherein the build direction is the direction in which the successive layers of ceramic powder materials are built-up one on the other during the additive manufacturing process (see arrow Z in Figure 5). The outer core body layer 14 can have a substantially uniform thickness on the core body or can have a thickness that varies to account for varying associated metal or alloy thickness(es) and thus heat loads at different locations of the cast component (e.g. Figure 3) and/or time-at-temperature casting conditions where some locations of ceramic casting core may experience higher temperatures for longer times.

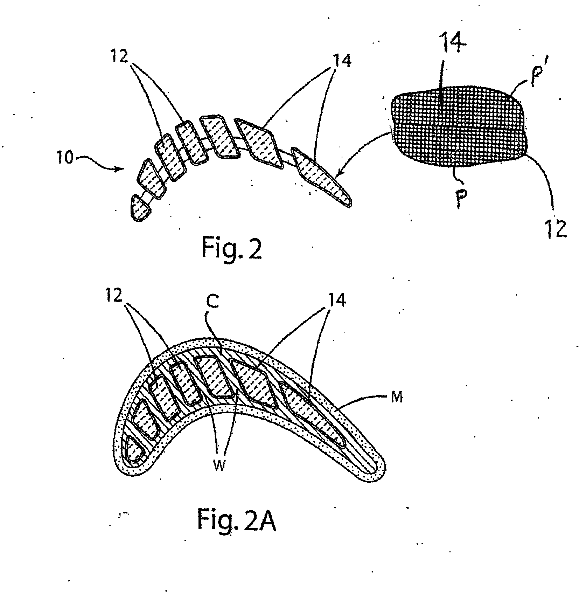

In an illustrative embodiment of the present invention of Figures 1, 2, and 2A, a 3D printed ceramic casting core 10 is provided for casting a hollow gas turbine engine airfoil component, such as a blade of vane having one or more internal passages for cooling air wherein the ceramic casting core 10 forms the inner cooling air passages when it is selectively removed from the cast superalloy component as is well known in the art. The ceramic core 10 includes a configuration selected to form the desired cooling air passages in the cast component to this end. The ceramic casting core 10 can include elongated slots or openings 20 to form multiple internal walls, pedestals or other internal metal or alloy features in the cast component as is well known. For example, through-slots or openings 20 will be filled with molten superalloy during casting, Figure 2A, so as to form internal walls W of the cast airfoil component C wherein the internal walls separate cooling air passages formed by adjacent core regions when the core is removed from the cast airfoil component. A multi-wall, internally cooled gas turbine airfoil component is thereby produced.

The ceramic casting core 10 includes ceramic body 12 and an outer core body layer 14 that resides on the core body 12 and comprises a different ceramic material from that of the core body so as to exhibit reduced reactivity to the molten superalloy being cast. Both the core body 12 and outer core body layer 14 have a resulting layer-on-layer structure or morphology of their respective ceramic particulates in the build direction of the as-additive manufactured core. Figure 2A shows a cast airfoil superalloy component C solidified in a ceramic investment shell mold M having fired ceramic core 10 in the mold M as described below.

The outer core body layer 14 can comprise one or more sub-layers as illustrated in Figure 4 such as an intermediate sub-layer 15 provided between the outer core body layer 14 and the core body 12 in order to improve the sintering dynamics between the outer core body layer to the core body and to accommodate thermal expansion differences between the core body 12 and the outer core body layer 14 to prevent separation/spallation of the latter from the former due to thermal expansion mismatches during core cool down from a subsequent core firing cycle or during heat up during the alloy casting process. To this end, the intermediate layer 15 can be a mixture of the ceramic particulate material used to form the outer core body layer 14 and the ceramic particulate material used to form the core body 12. Two or more sub-layers, compositionally graded in this manner, can be provided to promote adequate sinterability between layers and minimize the potential for associated thermal expansion differentials which could lead to layer separation/spallation of the outer core body layer from the core body.

Moreover, the core body 12 and/or intermediate sub-layer 15 can include a fugitive particulate material 18 (shown as black dots in Figure 4) that provides increased porosity in the core body 12 and/or intermediate sub-layer 15 compared to the core body outer layer 14 after the core firing cycle where the fugitive particulate material (e.g. graphite particles) 18 is selectively removed by thermal decomposition and thereby leaves porosity in the core body 12 and/or sub-layer 15. Two or more sub-layers can be provided to promote proper sinterability between all graded layers and to mitigate the potential for thermal expansion mismatches between layers which could lead to layer separation/spallation.

The invention also envisions providing one or more sub-layers 15 which have a structure, porosity, and/or composition to provide less rigidity than the outer core body layer 14 above it to facilitate removal of the ceramic core 10 from the cast component. For example, the intermediate layer(s) 15 can be made more easily crushable to facilitate removal of the ceramic core 10 from the cast metal or alloy component.

Figure 3 shows another illustrative embodiment of a ceramic casting core 10 pursuant to the invention wherein the invention envisions providing the core body 12 with leachant access channels 23a, 23b to facilitate access of leachant to the inside of the ceramic core 10 after the metal or alloy component is cast and solidified using the core. These leachant access channels can be provided in various configurations to suit different thicknesses of the core body 12 at different locations of the core body. For example, Figure 3 illustrates a main leachant access channel 23a extending axially through the core body and radial leachant access channels 23b extending radially outwardly at a thicker region of the outer core body layer 14. The radial access channels 23b are illustrated as being spaced circumferentially around the main access channel 23a at different axial locations along the main access channel, although any other configuration can be employed in practice of the invention.

Figure 3 also illustrates that the outer core body layer 14 has a different thickness at different locations of the ceramic core 10, such as at core region R. For example, the outer core body layer 14 is shown having a thickness at core region R that varies to account for thicker associated metal or alloy thickness(es) at different location CR of the cast component C adjacent to the core 10.

Moreover, the outer core body layer 14 also can be thicker at a location(s) where the ceramic core experiences harsher time-at-temperature casting conditions as a result of high temperatures for longer times. For purposes of illustration and not limitation, the thickness of the outer core body layer 14 can be in the range of 0.005 inches to 0.100 inches depending upon local heat loads resulting from thickness variations of the cast metal or alloy component.

In making the ceramic core 10 by additive manufacturing, such as 3D printing described below with respect to Figure 5, the ceramic particulate material typically is used in powder form. A preferred particulate form comprises substantially spherical ceramic powders. For purposes of illustration and not limitation in the casting of nickel or cobalt base superalloy components such as airfoil components, rare earth-containing powder (oxide or other compounds) can be used in practice of embodiments of the invention to form the outer core body layer 14, although the invention can practiced using any suitable ceramic particulate material in spherical or non-spherical particle shape and particle size that can be "printed". A preferred rare earth oxide is yttria, which has the highest Gibbs free energy per mole of oxygen of any oxide material. Either calcined or fused grades of rare earth oxides, such as yttria, or rare earth oxide containing compounds (non-oxides) can be used. The ceramic powder forming the outer core body layer 14 typically has a particle size (e.g. diameter) of about 1 to about 75 microns. The particle size of the ceramic particulate material usually is chosen in dependence upon the thickness of the additive layers to be deposited to build up the ceramic casting core 10; e.g. the ceramic particles are chosen to have a major dimension (e.g. diameter) which is generally less than the thickness of each additive layer to be deposited. Use of smaller ceramic particles permits ceramic core features with smaller dimensions and precision to be deposited and built up by the additive manufacturing process.

In contrast to the outer core body layer 14 chosen to be less chemically reactive, the inner core body 12 can be made of a lower cost, readily leachable bulk core body ceramic particulate material in a form that can be 3D printed to form the core body. For purposes of illustration and not limitation in the casting of nickel or cobalt base superalloy components such as hollow airfoil components, silica powder, alumina powder, zircon powder, mullite powder and combinations of two or more thereof can be used to form the core body 12 by 3D printing. The particle size (diameter) of the spherical core body powder typically can be in the range of about 1 to about 75 microns, although the invention can practiced using any suitable ceramic particulate material in spherical or non-spherical particle shape and particle size that can be "printed". As mentioned above, typically, the particle size is chosen in dependence upon the thickness of the additive layers to be deposited to build up the ceramic casting core 10; e.g. the ceramic particles are chosen to have a major dimension (e.g. diameter) which is generally less than the thickness of each additive layer to be deposited with smaller ceramic particles permitting deposition of ceramic core features with smaller dimensions and precision to be deposited and built up by the additive manufacturing process.

After the ceramic casting core 10 is formed by the additive manufacturing process, it can be subjected to a curing process if a curable binder, such as a photopolymer binder, has been used with the ceramic powder materials and not cured during in the additive manufacturing process itself. However, preferably, the ceramic particulate materials of the core body 12 and outer core body layer 14 are deposited in a mixture with a UV curable (photopolymer) flowable binder that is cured during the additive manufacturing process.

The ceramic core 10 then is subjected to a firing or sintering step where it is heated to an elevated temperature for a time dependent upon the particular ceramic particulate materials employed to build the core body 12 and outer core body layer 14 to remove the binder and impart increased core strength and other associated fired physical and chemical properties suitable for withstanding the casting operation in which molten metal or alloy is introduced and solidified in the investment shell mold M around the fired ceramic casting core 10. For example, when the core body 12 comprises a silica-based ceramic powder and the outer core layer 14 comprises a yttria layer as described above is used for casting a nickel or cobalt based superalloy, the sintering temperature can be in the range of 2000 to 2800 degrees F for up to approximately 80 hours to develop adequate core strength and other associated fired physical and chemical properties for casting the molten superalloy.

For purposes of illustration and not limitation, Figure 2A illustrates a section of the cast airfoil superalloy component designated C in a ceramic investment casting shell mold M and the fired ceramic casting core 10 residing in the mold. After the cast airfoil superalloy component C is cast and solidified, the investment shell mold M and the fired ceramic casting core 10 are removed in a manner well known to those skilled in the art and forming no part of the present invention.

The ceramic casting core 10 described above can be formed by any suitable additive manufacturing process using a model of the ceramic core, such as a design electronic model, defined in any suitable manner wherein the additive manufacturing process is capable of depositing different ceramic particulate materials as layers to form the core body 12 and the outer core body layer 14. The model of the component may be designed with the aid of computer-aided design (CAD) software. The model may include 3D numeric coordinates of the entire configuration of the component including both external and internal surfaces. The model may include a number of successive two-dimensional slices that together form the 3D component.

Referring to Figure 5, a preferred additive manufacturing process for use in practicing the invention comprises direct write deposition (3D printing) wherein the layers of the different ceramic particulates are deposited on a support or tray 50 to build up the core body 12 comprising the low cost, readily leachable ceramic particulate material and the outer core body layer 14 comprising the substantially non-reactive ceramic barrier layer 14. The ceramic particulate materials of the core body 12 and outer core body layer 14 are deposited as-mixed with a low viscosity, low surface tension UV curable (photopolymer) flowable binder that is cured during the additive manufacturing process. The ceramic powder and the curable binder can be mixed by various blending techniques including, but no limited to, planetary mixing (e.g. DPM mixers produced by Charles Ross & Son, Hauppauge, NY) to provide a flowable composition that can be 3D printed. For example, in this direct writing process, a cassette 52 having multiple nozzles 54 (e.g. two or more nozzles) is provided. To make the ceramic casting core 10, one of the nozzles 54 is computer controlled through a controller 62 to deposit (e.g. spray) the mixture of the highly leachable, low cost ceramic particulate material, such silica-based powder, and the low viscosity, low surface tension UV curable binder as a desired 2D shaped layer of the core body 12 while another nozzle is computer controlled by controller 62 to deposit the mixture of the substantially non-reactive ceramic particulate material (e.g. yttria powder) and the low viscosity, low surface tension UV curable binder as a desired 2D shaped layer of the outer core body layer 14 as the cassette 52 is traversed on a carriage 60 (partially shown) from a starting position, such as on the left side of the tray 50, to an end position, such as to the right side of the tray 50. The mixtures of ceramic powder and UV curable binder can be provided from compartments S1, S2 on the cassette 52 or directly from external mixture storage tanks via supply conduits. The just deposited powder/binder layers shown on the tray 50 in Figure 5 are then cured by a UV lamp L mounted on the carriage 60 as the cassette 52 traverses back to the starting position, the specific wavelength of the UV lamp being chosen with respect to the specific UV curable binder employed. The tray 50 is then lowered in a vertical build direction Z by a desired increment, and the deposition of the next powder/binder layers is effected on top of the just deposited/ cured powder/binder layers of the core body and the outer core body layer. This layer-by-layer building process is repeated to build-up the ceramic casting core 10 described above on the tray 50. For purposes of illustration and not limitation, a direct write printing process can be practiced using a direct write 3D printer available as Pro-Jet® Model 5500X printer from 3D Systems, Rock Hill, South Carolina or available as Stratasys model Connex 350 printer from Stratasys, Ltd, Eden Prairie, Minnesota. UV curable photopolymer binders suited to the Pro-Jet® Model 5500X printer include, but are not limited to, VisiJet CR-CL, VisiJet CR-WT, and VisiJet CF-BK available from 3D Systems. UV curable photopolymer binders for the Stratasys Connex 350 printer include, but are not limited to, RGD 450 and RGD 525 available from Stratasys, Ltd.

Practice of the present invention is advantageous in employing additive manufacturing techniques to precisely construct the outer core body layer from ceramic powder materials independent of those of the bulk core body. For example, the outer core body layer can be composed of preferential, non-reactive ceramic particulate materials in contrast to the bulk core body chemistry and/or particle size. The resultant porosity of the outer core body layer and internal core body can also be dictated and controlled independently by the addition of fugitive materials to the deposition materials. The peripheral, non-reactive outer core body layer can be built to varying thicknesses, within a particular singular ceramic core design, to account for varying associated alloy thicknesses or time-at-temperature casting conditions, or can be of consistent thickness for a given ceramic core configuration. In addition, additive manufacturing permits the incorporation of leachant-enhancing channels or void-spaces within the ceramic core, strategically located adjoining, or with preference to, thicker areas of the less-leachable peripheral layer(s).

Practice of the invention also is advantageous in that additive manufacturing offers a means of producing cast metal or alloy components with minimal-to-no reaction via the strategic application of a non-reactive exterior layer(s) to ceramic cores wherein the layer(s) need only be "built" in necessary thicknesses and at precisely the necessary peripheral zones of the core most susceptible to reaction during the casting process to produce low-to-no reaction cast gas turbine engine components, such as a cast airfoil components, or any other cast component.

Although the present invention has been described with respect to certain illustrative embodiments, those skilled in the art will appreciate that changes and modifications can be made therein within the scope of the invention as set forth in the appended claims.

## Claims

1. A ceramic casting core (10), comprising a ceramic particulate body (12) and an outer core layer (14) that is disposed on the core body (12) and comprises a different particulate material from that of the core body (12) and exhibiting reduced reactivity to the molten metal or alloy being cast, wherein the core body (12) and the outer core layer (14) each comprises a layer-on-layer structure of their respective particulate materials resulting from an additive manufacturing process, in particular, a 3D printing process.

2. The core of claim 1 wherein the outer core layer (14) has a thickness that is different at different locations on the core body (12).

3. The core of claim 1 or 2, wherein the outer core layer (14) comprises multiple layers wherein at least one sub-layer includes a fugitive particulate material; and/or
wherein an outermost sub-layer is more rigid than a sub-layer below it.

4. The core of one of the claims 1 to 3 wherein the core body includes leachant access channels.

5. The core of one of the claims 1 to 4 wherein the outer core layer (14) comprises a rare earth oxide powder, in particular yttria; and/or
wherein the core body (12) comprises a ceramic powder comprising a metaloxide, silica, alumina, mullite, zircon, and combinations of two or more thereof.

6. The core of one of the claims 1 to 5 wherein the outer core layer (14) has a graded ceramic composition that varies across its thickness.

7. The core of one of the claims 1 to 6 wherein the layer-on-layer structure includes a cured binder.

8. The core of one of the claims 1 to 7 wherein the outer core layer (14) has a graded ceramic composition.

9. A method of making a ceramic casting core, comprising depositing a first ceramic particulate material in layer-on-layer manner on a support to form a 3D core body and depositing a second, different ceramic particulate material in layer-on-layer manner on the support to form a 3D outer core body layer wherein the different ceramic particulate material exhibits reduced reactivity to the molten metal or alloy being cast.

10. The method of claim 9 including mixing the first ceramic particulate material with a flowable and curable binder before deposition on the support, and/or
including mixing the second ceramic particulate material with a flowable curable binder before deposition on the tray.

11. The method of claim 9 or 10 wherein a third fugitive particulate material is mixed with at least one of the first ceramic particulate material and second ceramic particulate material for deposition on the support.

12. The method of one of the claims 9 to 11 wherein the first ceramic particulate material is deposited with a UV curable binder and the second ceramic particulate material is deposited with a UV curable binder.

13. The method of one of the claims 9 to 12 wherein the first ceramic particulate material and the second ceramic particulate material are deposited in a pass of a cassette having nozzles over the support and wherein the UV curable binder is cured in a pass of the cassette in an opposite direction over the support; and/or
wherein the second ceramic particulate material is deposited to form a core body layer having a thickness which varies at different locations.

14. The method of one of the claims 9 to 13 wherein the first ceramic particulate comprises at least one of silica, alumina, mullite, and zircon; and/or
wherein the second ceramic particulate comprises rare earth oxide.

15. The method of one of the claims 9 to 14 wherein the ceramic casting core is fired to impart strength and other requisite physical and chemical properties to withstand casting of a molten metal or alloy therearound.
